(19) Europäisches Patentamt
European Patent Office
Office européen des brevets

(11) **EP 4 769 495 A1**

(12) **EUROPEAN PATENT APPLICATION**

(43) Date of publication:
**01.07.2026 Bulletin 2026/27**

(21) Application number: 25224923.0

(22) Date of filing: **18.12.2025**

(51) International Patent Classification (IPC):
*H01M 4/04* (2006.01)     *H01M 4/136* (2010.01)
*H01M 4/36* (2006.01)     *H01M 4/58* (2010.01)
*H01M 4/62* (2006.01)     *H01M 10/0525* (2010.01)

(52) Cooperative Patent Classification (CPC):
**H01M 4/366; H01M 4/0471; H01M 4/136;
H01M 4/5825; H01M 4/625; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024231675**

(71) Applicant: **Toyota Jidosha Kabushiki Kaisha
Toyota-shi, Aichi-ken 471-8571 (JP)**

(72) Inventors:
• **KOSAKA, Daichi
  Toyota-shi, 471-8571 (JP)**
• **MAHARA, Takanori
  Toyota-shi, 471-8571 (JP)**

(74) Representative: **Kuhnen & Wacker
Patent- und Rechtsanwaltsbüro PartG mbB
Prinz-Ludwig-Straße 40 A
85354 Freising (DE)**

(54) **POSITIVE ELECTRODE ACTIVE MATERIAL, BATTERY, AND MANUFACTURING METHOD FOR POSITIVE ELECTRODE ACTIVE MATERIAL**

(57)     A positive electrode active material includes a primary particle (1) containing an olivine-type phosphate compound and a coating material (5) containing carbon and coating at least part of a surface of the primary particle (1). In a TEM-EDS analysis, a Group 2 element is detected within the primary particle (1) and within the coating material (5).

# FIG. 1

**Description**

BACKGROUND OF THE INVENTION

1. Field of the Invention

The disclosure relates to a positive electrode active material, a battery, and a manufacturing method for a positive electrode active material.

2. Description of Related Art

Japanese Unexamined Patent Application Publication (Translation of PCT Application) No. 2019-536194 (JP 2019-536194 A) describes that a coating layer is formed on the surface of a positive electrode active material and the material of the coating layer is a metal oxide or a fluoride.

SUMMARY OF THE INVENTION

To improve battery characteristics, olivine-type phosphate compounds, such as lithium manganese phosphate (LMP) and lithium manganese iron phosphate (LMFP), have been developed. In liquid batteries, a small amount of contaminated moisture can react with a fluoride, such as $LiPF_6$, in an electrolytic solution to potentially generate hydrogen fluoride (HF). HF reacts with an olivine-type phosphate compound, to cause manganese (Mn) to continuously dissolve from the surface. This may lead to the disruption of the crystal structure of the olivine-type phosphate compound and the deterioration of cycle characteristic.

By coating the olivine-type phosphate compound with the materials as described in JP 2019-536194 A, it is expected that the deterioration of cycle characteristic is reduced. However, there is still room for improvement.

The disclosure improves the cycle characteristic of a battery.

Hereinafter, the technical configuration and effects of the disclosure will be described. However, the working mechanism of the disclosure includes assumptions. The working mechanism does not limit the technical scope of the disclosure.

[1] A first aspect of the invention relates to a positive electrode active material. The positive electrode active material includes a primary particle containing an olivine-type phosphate compound and a coating material containing carbon and coating at least part of a surface of the primary particle. In a TEM-EDS analysis, a Group 2 element is detected within the primary particle and within the coating material.

The Group 2 element contained in the coating material is considered to be present as an alkaline carbide or oxide within the coating material. Because the alkaline carbide or oxide traps acidic HF, the primary particle (positive electrode active material) can be protected. As a result, the degradation of the positive electrode active material is reduced, so the cycle characteristic is expected to be improved.

The positive electrode active material expands and contracts with the charging and discharging of a battery, which leads to structural degradation, such as cracking. The Group 2 element contained in the primary particle is presumably used to reduce structural degradation due to expansion and contraction. As a result, an improvement in cycle characteristic is expected.

[2] The Group 2 element may be detected in a region within the coating material at a distance of 2 nm or less from an interface between the primary particle and the coating material.

The protective effect of the primary particle is presumably enhanced because the Group 2 element is contained near the primary particle in the coating material. As a result, an improvement in the cycle characteristic is further expected.

[3] The atomic fraction of the Group 2 element in the region within the coating material may be higher than or equal to 2%.

The protective effect of the primary particle is presumably enhanced because a certain amount of the Group 2 element is contained near the primary particle in the coating material. As a result, an improvement in the cycle characteristic is further expected.

[4] A mass fraction of the Group 2 element may be higher than or equal to 0.1% relative to a mass of the positive electrode active material.

When the mass fraction of the Group 2 element contained in the coating material is higher than or equal to 0.1% relative to the mass of the positive electrode active material, an improvement in cycle characteristic is expected.

[5] The Group 2 element may be magnesium.

Magnesium (Mg) can be stably present in an Mn-Fe site within the crystal structure of the olivine-type phosphate compound. As a result, the crystal structure of the olivine-type phosphate compound stabilizes, so an improvement in cycle characteristic is expected.

[6] A secondary particle may be made up of the primary particles.

[7] The olivine-type phosphate compound may include at least one selected from the group consisting of lithium manganese phosphate and lithium manganese iron phosphate.

[8] A second aspect of the invention relates to a battery. The battery includes the positive electrode active material of the first aspect.

[9] The battery may have a bipolar structure.

[10] A third aspect of the invention relates to a manufacturing method for a positive electrode active material. The manufacturing method includes: (a) forming a first slurry by mixing a manganese compound, a lithium compound, a phosphate compound, a chelate compound, and a first solvent; (b) forming first precursor particles by drying the first slurry; (c) forming second precursor particles by subjecting the first precursor particles to a first heat treatment; (d) forming a second slurry by mixing the second precursor particles, a carbon source, and a second solvent; (e) forming third precursor particles by drying the second slurry; and (f) manufacturing an olivine-type phosphate compound by subjecting the third precursor particles to a second heat treatment. The olivine-type phosphate compound is surrounded by a coating material; and the chelate compound contains a Group 2 element.

The positive electrode active material of the first aspect is expected to be manufactured through a manufacturing process of the third aspect.

[11] The chelate compound may contain a sugar carboxylic acid.

Hereinafter, one embodiment of the disclosure (hereinafter, which can be simply referred to as "present embodiment") and one example of the disclosure (hereinafter, which can be simply referred to as "present example") will be described. However, the present embodiment and the present example do not limit the technical scope of the disclosure. The present embodiment and the present example are illustrative in all respects. The present embodiment and the present example are not restrictive. The technical scope of the disclosure encompasses all modifications within the scope of the appended claims and equivalents thereof. For example, any components can be extracted from the present embodiment and any combinations of them are anticipated from the beginning.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram of TEM-EDS analysis on a primary particle;

FIG. 2 is another conceptual diagram of TEM-EDS analysis on a primary particle;

FIG. 3 is a conceptual diagram of a secondary particle in an embodiment;

FIG. 4 is a schematic flowchart that shows a manufacturing method for a positive electrode active material in the embodiment;

FIG. 5 is a schematic perspective view of a battery in the embodiment;

FIG. 6 is a schematic sectional view taken along the line VI-VI in FIG. 5; and

FIG. 7 is a table that shows the experimental results of No. 1 to No. 14 in an example.

DETAILED DESCRIPTION OF EMBODIMENTS

Terms and Phrases

The terms "include", "contain", "have", and their modifications are open-ended expressions. A structure expressed in an open-ended manner may further include additional elements or do not need to include additional elements, in addition to indispensable elements. The term "consist of" is a closed-ended expression. However, even a structure expressed in a closed-ended manner can include commonly associated impurities or additional elements irrelevant to a target technology. The term "essentially consist of... " is a semi-closed-ended expression. A structure expressed in a semi-closed-ended expression is allowed to add elements that substantially do not affect basic and new characteristics of a target technology.

The expressions "may", "can", and the like, are used not in the sense of obligatory "the meaning of must" but in the sense of permission "the meaning of possibility".

The execution sequences of pluralities of steps, actions, operations, and the like, included in various methods are not limited to sequences described unless otherwise specified. For example, a plurality of steps may proceed simultaneously. For example, a plurality of steps may be executed in tandem.

The expressions "first", "second", and the like, are used to just differentiate a plurality of elements from each other. The expressions do not limit elements to which those expressions are assigned. The expressions are irrelevant to the sequence, the degree of importance, and the like, of elements to which the expressions are assigned.

For example, the expression "at least one of A and B" includes "A or B" and "A and B". The expression "at least one of A and B" can be written as "A and/or B".

Geometrical terms should not be interpreted in a strict sense. Examples of the geometrical terms include "parallel", "perpendicular", and "orthogonal". For example, the direction, angle, and distance may be relatively changed as long as substantially the same or similar function is obtained. Geometrical terms can include tolerances, errors, and the like, related to, for example, design, operation, and manufacturing. The dimensional relationships in each figure may not correspond to the actual dimensional relationships. The dimensional relationships in each figure may be changed to help readers' understanding. For example, length, width, or thickness may be changed. Part of a structure may be omitted.

Elements described in the "singular form" can also include those in the plural form unless otherwise specified. For example, a particle may refer to a plurality of particles, an assembly of particles, and powder and granular materials.

A numerical range, such as "m% to n%", includes both the upper limit and the lower limit unless otherwise specified. In other words, "m% to n%" means the numerical range "higher than or equal to m% and lower than or equal to n%". The numerical range "higher than or equal to m% and lower than or equal to n%" includes the numerical range "higher than m% and lower than n%". The terms "greater than or equal to" and "less than or equal to" are respectively represented by non-strict inequalities "≤" and "≥". The terms "greater than" and "less than" are respectively represented by strict inequalities "<" and ">". Any numeric value selected from within a numerical range may be set as a new upper limit or lower limit. For example, a new numerical range may be set by using any combination of a numeric value within a numerical range and a numeric value described in other parts, tables, figures, and the like in the specification.

All numeric values are modified by the term "about". The term "about" can mean, for example, ±5%, ±3%, or ±1%. All numeric values are approximate values that can vary depending on the mode of use of a target technology. All numeric values can be represented by significant figures. Measured values can be average values from a plurality of measurements unless otherwise specified. The number of measurements may be three or more, may be five or more, or may be 10 or more. Generally, as the number of measurements increases, the reliability of the average value is expected to improve. Measured values can be rounded based on the number of significant figures. Measured values can include errors and the like due to, for example, the detection limits of measuring devices.

Devices, software, and the like used for measurements of various values are only examples. Devices equivalent to illustrated devices and the like may be used. When equivalent devices are used, measurement conditions may be adjusted according to the devices.

A transmission electron microscope energy dispersive X-ray spectroscopy (TEM-EDS) analysis on primary particles is conducted using the following procedure. A sample is prepared by embedding a positive electrode active material (powder) in a resin. The sample is sliced using focused ion beam (FIB) or cross section polisher (CP). The sample is observed using a TEM. The observation magnification may be, for example, about 10,000 times to about 50,000 times.

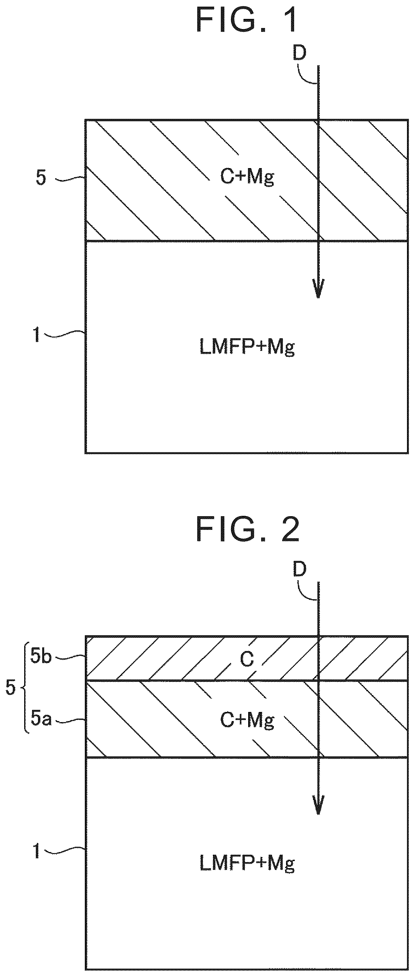

In a TEM image (cross-sectional image), the material adhering to the outer surface of a primary particle is regarded as a "coating material". FIG. 1 is a conceptual diagram of a part near the outermost surface of a primary particle. A radial direction D is a normal direction to the surface of the primary particle 1. A line analysis is conducted in the radial direction D. An analysis is conducted at measurement points spaced at regular intervals (1.0 nm). An analysis may be conducted, for example, over a distance of 20 nm or deeper from the outermost surface of the primary particle 1. When the Group 2 element is Mg and the olivine-type phosphate compound is LMFP, carbon (C), Mg, Mn, and iron (Fe) are the elements to be measured.

When a line analysis is conducted, the signal strength (peak height) of a peak top of a target peak is determined. The atomic concentration of each element is calculated based on the signal strength of the element. A region in which the atomic concentration of C is higher than or equal to 20% is regarded as "coating material 5". A region in which the total atomic concentration of Mn and Fe is higher than or equal to 70% is regarded as "primary particle 1". When Mg is detected in the region in which the atomic concentration of C is higher than or equal to 20%, the coating material 5 is regarded as containing Mg. When Mg is detected in a region in which the total atomic concentration of Mn and Fe is higher than or equal to 70%, the primary particle 1 is regarded as containing Mg.

In the coating material 5, the average concentration of Mg in a region at a distance of 2 nm or less from the interface between the primary particle 1 and the coating material 5 is regarded as the "atomic fraction of Mg in the region within the coating material". When the thickness of the coating material 5 is less than 2 nm, the average concentration of Mg within the coating material 5 is regarded as the "atomic fraction of Mg in the region within the coating material".

The amount of the Group 2 element contained in the positive electrode active material can be measured by inductively coupled plasma atomic emission spectroscopy (ICP-AES). 0.1 g of the positive electrode active material is mixed with hydrochloric acid (6 mol/L) and heated (first mixture). After cooling, an insoluble component is separated by filtration, and boric acid and sodium carbonate are further mixed with the first mixture, and then the obtained mixture is heated. After cooling, the melt is crushed and mixed with hydrochloric acid (second mixture). A sample solution is prepared by mixing the first mixture and the second mixture. The sample solution is diluted to an adequate concentration using a volumetric flask. After the dilution, a composition analysis is conducted using an ICP-AES device. For example, product name "PS3520 UVDD II (manufactured by Hitachi High-Tech Science Corporation)" may be used.

The chemical composition of a chemical compound can also be measured using ICP-AES. A sample solution is prepared by dissolving 0.1 g of the positive electrode active material in a mixed acid (10 ml) of hydrochloric acid and sulfuric acid. The sample solution is diluted to an adequate concentration using a volumetric flask. After the dilution, a composition analysis is conducted using an ICP-AES device.

"D50" refers to the particle size at which the cumulative value is 50% in the volume-based particle size distribution (cumulative distribution). D50 is measured, for example, by a laser diffraction particle size analyzer.

"Maximum Feret diameter" refers to the length of the long side of a circumscribed rectangle (rectangle or square) of a particle. When the circumscribed rectangle is a square, the length of the long side refers to the length of each side.

A stoichiometric formula represents a typical example of a chemical compound. A chemical compound may have a non-stoichiometric composition. For example, "$Al_2O_3$" is not limited to chemical compounds having a molar ratio of "Al/O = 2/3". "$Al_2O_3$" represents chemical compounds that include Al and O at a selected molar ratio unless otherwise specified. For example, the chemical compound may be doped with trace elements. Some of Al and O may be substituted with other elements.

A "derivative" refers to a chemical compound modified from a parent chemical compound by at least one selected from the group consisting of introduction of functional groups, substitution of atoms, oxidation, reduction, and other chemical reactions. The number of modification sites may be one or more. A "substituent" may include, for example, at least one selected from the group consisting of alkyl group, alkenyl group, alkynyl group, cycloalkyl group, unsaturated cycloalkyl group, aromatic group, heterocyclic group, halogen atoms (such as F, Cl, Br, and I), OH group, SH group, CN group, SCN group, OCN group, nitro group, alkoxy group, unsaturated alkoxy group, amino group, alkylamino group, dialkylamino group, aryl oxy group, acyl group, alkoxycarbonyl group, acyl oxy group, aryl oxycarbonyl group, acylamino group, alkoxycarbonylamino group, aryl oxycarbonylamino group, sulfonylamino group, sulfamoyl group, carbamoyl group, alkylthio group, arylthio group, sulfonyl group, sulfinyl group, ureido group, phosphoramidate group, sulfo group, carboxyl group, hydroxamic acid group, sulfino group, hydrazino group, imino group, and silyl group. These substituents may be further substituted. When two or more substituents are included, the substituents may be the same or may be different. A plurality of substituents may be bonded to each other to form a ring.

Positive Electrode Active Material

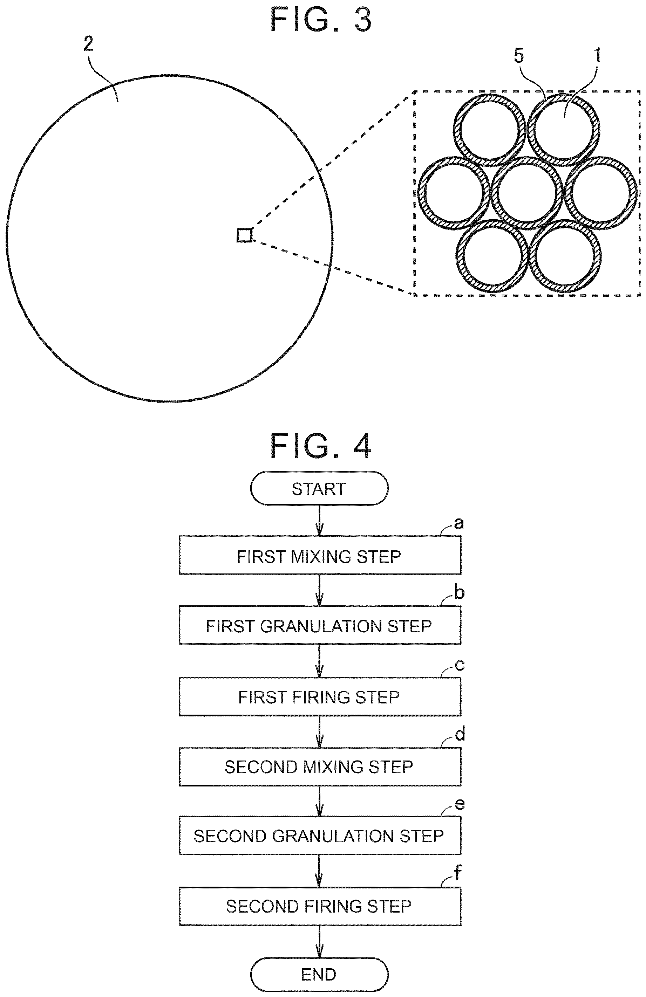

FIG. 3 is a conceptual diagram of a secondary particle in the present embodiment. A positive electrode active material includes sets of a primary particle 1 and a coating material 5. The "primary particle 1" is a minimum unit of particle. The primary particles 1 may be present alone without aggregating. The primary particles 1 that are present alone are also referred to as single particles. A secondary particle 2 may be made up of the primary particles 1. A positive electrode active material may be, for example, powder of the secondary particles 2. The D50 of the positive electrode active material may be, for example, greater than or equal to 5 $\mu$m, greater than or equal to 10 $\mu$m, greater than or equal to 15 $\mu$m, or greater than or equal to 20 $\mu$m. The D50 of the positive electrode active material may be, for example, less than or equal to 30 $\mu$m, less than or equal to 25 $\mu$m, less than or equal to 20 $\mu$m, less than or equal to 15 $\mu$m, or less than or equal to 10 $\mu$m.

The secondary particle 2 is an aggregate of primary particles 1. The secondary particle 2 can have any shape. The secondary particle 2 may have, for example, a spherical shape, a rod shape, or an angular shape. Since the secondary particle 2 is spherical, for example, an improvement in packing efficiency is expected. The sphericity of the secondary particle 2 may be, for example, higher than or equal to 0.85, higher than or equal to 0.90, or higher than or equal to 0.95. The sphericity of the secondary particle 2 may be, for example, lower than or equal to 1, lower than or equal to 0.95, or lower than or equal to 0.90. The "sphericity" refers to the degree of circularity in a scanning electron microscope (SEM) image (two-dimensional image). The sphericity (degree of circularity) is obtained from the following formula.

$$\psi = 4\pi S/L^2$$

$\psi$: sphericity (degree of circularity)
$\pi$: circular constant
S: the cross-sectional area of the secondary particle 2 (the area of the region enclosed by the contour of the secondary particle 2)

L: the perimeter of the secondary particle 2 (the length of the contour of the secondary particle 2)

The sphericity refers to an arithmetic mean of 30 secondary particles 2.

The primary particle 1 can have any shape. The primary particle 1 may have, for example, a spherical shape, a rod shape, or an angular shape. The maximum Feret diameter of the primary particle 1 may, for example, range from 10 nm to 90 nm. The maximum Feret diameter of the primary particle 1 may be, for example, greater than or equal to 20 nm, greater than or equal to 30 nm, greater than or equal to 40 nm, greater than or equal to 50 nm, greater than or equal to 60 nm, greater than or equal to 70 nm, or greater than or equal to 80 nm. The maximum Feret diameter of the primary particle 1 may be, for example, less than or equal to 80 nm or less than or equal to 60 nm. The maximum Feret diameter of the primary particle 1 refers to an arithmetic mean of 30 primary particles 1.

The coating material 5 (FIG. 1) coats at least part of the surface of the primary particle 1. The coating material 5 may coat the entire surface of the primary particle 1.

The coating material 5 contains C. The coating material 5 may contain, for example, amorphous carbon.

In a TEM-EDS analysis, a Group 2 element is detected within the primary particle 1 and within the coating material 5. In other words, the primary particle 1 and the coating material 5 contain a Group 2 element. The Group 2 elements include beryllium (Be), Mg, calcium (Ca), strontium (Sr), barium (Ba), and radium (Ra). The coating material 5 may contain at least one selected from the group consisting of Mg and Ca as a Group 2 element. The Group 2 element contained in the coating material 5 may be Mg.

A Group 2 element may be detected in a region within the coating material 5 (hereinafter, simply referred to as a "coating material region") at a distance of 2 nm or less from the interface between the primary particle 1 and the coating material 5. For example, as shown in FIG. 2, in the radial direction D, a region at a distance of 2 nm or less from the interface between the primary particle 1 and the coating material 5 is defined as a first region 5a, and a region surrounded by the outermost surface of the coating material 5 and the first region 5a is defined as a second region 5b. The first region 5a and the second region 5b contain C. The first region 5a contains a Group 2 element. The second region 5b may contain a group 2 element or does not need to contain a Group 2 element.

The atomic fraction of the Group 2 element in the coating material region is higher than or equal to 2%. The atomic fraction of the Group 2 element in the coating material region may be higher than or equal to 5%, higher than or equal to 8%, higher than or equal to 10%, higher than or equal to 13%, higher than or equal to 15%, higher than or equal to 18%, or higher than or equal to 20%. The atomic fraction of the Group 2 element in the coating material region may be lower than or equal to 40%, lower than or equal to 38%, lower than or equal to 35%, lower than or equal to 33%, lower than or equal to 30%, lower than or equal to 28%, or lower than or equal to 25%. The atomic fraction of the Group 2 element in the coating material region may be higher than or equal to 2% and lower than or equal to 40%, may be higher than or equal to 8% and lower than or equal to 35%, may be higher than or equal to 10% and lower than or equal to 30%, or may be higher than or equal to 15% and lower than or equal to 30%.

The thickness of the coating material 5 may be, for example, greater than or equal to 0.5 nm, greater than or equal to 1 nm, greater than or equal to 2 nm, greater than or equal to 3 nm, greater than or equal to 4 nm, or greater than or equal to 5 nm. The thickness of the coating material 5 may be, for example, less than or equal to 10 nm, less than or equal to 9 nm, less than or equal to 8 nm, less than or equal to 7 nm, less than or equal to 6 nm, or less than or equal to 5 nm.

The mass fraction of the coating material 5 may be higher than or equal to 0.2%, higher than or equal to 0.5%, higher than or equal to 1%, higher than or equal to 2%, higher than or equal to 3%, or higher than or equal to 4% relative to the mass of the positive electrode active material (olivine-type phosphate compound). The mass fraction of the coating material 5 may be lower than or equal to 10%, lower than or equal to 9%, lower than or equal to 8%, lower than or equal to 7%, lower than or equal to 6%, or lower than or equal to 5% relative to the mass of the positive electrode active material.

The mass fraction of C may be higher than or equal to 0.1% relative to the mass of the positive electrode active material. The mass fraction of C may be higher than or equal to 0.3%, higher than or equal to 0.5%, higher than or equal to 0.7%, higher than or equal to 1%, or higher than or equal to 1.5% relative to the mass of the positive electrode active material. The mass fraction of C may be lower than or equal to 5%, lower than or equal to 4%, lower than or equal to 3%, lower than or equal to 2.5%, or lower than or equal to 2% relative to the mass of the positive electrode active material.

The mass fraction of the Group 2 element may be higher than or equal to 0.1% relative to the mass of the positive electrode active material. The mass fraction of the Group 2 element may be higher than or equal to 0.5%, higher than or equal to 1%, higher than or equal to 1.5%, or higher than or equal to 2% relative to the mass of the positive electrode active material. The mass fraction of the Group 2 element may be lower than or equal to 10%, lower than or equal to 9%, lower than or equal to 8%, lower than or equal to 7%, lower than or equal to 6%, or lower than or equal to 5% relative to the mass of the positive electrode active material. The mass fraction of the Group 2 element may be higher than or equal to 0.1% and lower than or equal to 10%, may be higher than or equal to 0.1% and lower than or equal to 6%, may be higher than or equal to 1% and lower than or equal to 6%, may be higher than or equal to 1.5% and lower than or equal to 5%, or may be higher than or equal to 2% and lower than or equal to 5% relative to the mass of the positive electrode active material.

In the present embodiment, when the atomic fraction of the Group 2 element in the coating material region falls within a specific range and the mass fraction of the Group 2 element relative to the mass of the positive electrode active material falls within a specific range, an improvement in cycle characteristic is further expected. Preferably, the atomic fraction of the Group 2 element in the coating material region ranges from 10% to 30%. Preferably, the mass fraction of the Group 2 element relative to the mass of the positive electrode active material ranges from 1.5% to 5%.

The primary particle 1 contains an olivine-type phosphate compound. The "olivine type" indicates a crystal structure that belongs to space group Pnma. The space group is identified through powder X-ray diffraction (XRD) method. The primary particle 1 may be, for example, a single-phase chemical compound. The primary particle 1 may further contain a phase that belongs to another space group as long as the primary particle 1 contains an olivine-type crystal phase. The primary particle 1 may further contain, for example, an amorphous phase.

The olivine-type phosphate compound may include at least one selected from the group consisting of LMP and LMFP. The primary particle 1 may have, for example, a composition represented by the following general formula.

$$Li_{1-a}Mn_{1-x}Fe_xPO_4$$

For example, the condition "$-0.5 \leq a \leq 0.5$" may be satisfied. x may be, for example, greater than or equal to 0, greater than or equal to 0.05, greater than or equal to 0.1, greater than or equal to 0.2, greater than or equal to 0.3, greater than or equal to 0.4, greater than or equal to 0.5, greater than or equal to 0.6, greater than or equal to 0.7, greater than or equal to 0.8, or greater than or equal to 0.9. x may be, for example, less than 1, less than or equal to 0.9, less than or equal to 0.8, less than or equal to 0.7, less than or equal to 0.6, less than or equal to 0.5, less than or equal to 0.4, less than or equal to 0.3, less than or equal to 0.2, or less than or equal to 0.1.

In LMP and LMFP, an element (dopant) other than lithium (Li), Mn, Fe, phosphorus (P), or oxygen (O) may be doped. A doping amount (mole fraction relative to the amount of substance of Li) may, for example, range from 0.01 to 0.1. The dopant may include, for example, at least one selected from the group consisting of boron (B), nitrogen (N), halogen, silicon (Si), sodium (Na), Mg, aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), Sr, yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and actinides.

The positive electrode active material may further contain other components as long as the positive electrode active material contains an olivine-type phosphate compound. Examples of the other components may include lithium iron phosphate (LFP), lithium nickel composite oxide (LNO), lithium cobalt composite oxide (LCO), and lithium manganese composite oxide (LMO). The mixing ratio (mass ratio) of LMFP and other components may be, for example, "LMFP/other components = 9/1 to 1/9", "LMFP/other components = 8/2 to 2/8", "LMFP/other components = 7/3 to 3/7", or "LMFP/other components = 6/4 to 4/6". The positive electrode active material may be, for example, a mixture of the powder of LMFP and the powder of other components.

LFP may have, for example, a composition represented by a general formula "$Li_{1-a}FePO_4$ ($-0.5 \leq a \leq 0.5$)". LMP may have, for example, a composition represented by a general formula "$Li_{1-a}MnPO_4$ ($-0.5 \leq a \leq 0.5$)".

LNO may have, for example, a crystal structure that belongs to space group R-3m. LNO may have, for example, a composition represented by the following general formula.

$$Li_{1-a}Ni_xM_{1-x}O_2$$

In the formula, the conditions $-0.5 \leq a \leq 0.5$ and $0 \leq x \leq 1$ are satisfied. M may include, for example, at least one selected from the group consisting of Co, Mn, and Al. For example, the condition $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. For example, the condition $-0.4 \leq a \leq 0.4$, $-0.3 \leq a \leq 0.3$, $-0.2 \leq a \leq 0.2$, or $-0.1 \leq a \leq 0.1$ may be satisfied.

LNO may include, for example, at least one selected from the group consisting of $LiNi_{0.9}Co_{0.1}O_2$, $LiNi_{0.9}Mn_{0.1}O_2$, and $LiNiO_2$.

LNO may be, for example, represented by the following general formula. The chemical compound represented by the following general formula can also be referred to as "NCM".

$$Li_{1-a}Ni_xCo_yMn_zO_2$$

In the formula, the conditions $-0.5 \leq a \leq 0.5$, $0 < x < 1$, $0 < y < 1$, $0 < z < 1$, and $x + y + z = 1$ are satisfied. For example, the condition $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the condition $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the condition $0 < z \leq 0.1$, $0.1 \leq z$

$\leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCM may include, for example, at least one selected from the group consisting of $LiNi_{1/3}CO_{1/3}Mn_{1/3}O_2$, $LiNi_{0.4}Co_{0.3}Mn_{0.3}O_2$, $LiNi_{0.3}CO_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

LNO may be, for example, represented by the following general formula. The chemical compound represented by the following general formula can also be referred to as "NCA".

$$Li_{1-a}Ni_xCo_yAl_zO_2$$

In the formula, the conditions $-0.5 \leq a \leq 0.5$, $0 < x < 1$, $0 < y < 1$, $0 < z < 1$, and $x + y + z = 1$ are satisfied. For example, the condition $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the condition $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the condition $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{00.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

Manufacturing Method for Positive Electrode Active Material

FIG. 4 is a schematic flowchart that shows a manufacturing method for a positive electrode active material in the present embodiment. Hereinafter, the "manufacturing method for a positive electrode active material in the present embodiment" can be abbreviated as "the method". The method may include, for example, "(a) first mixing step", "(b) first granulation step", "(c) first firing step", "(d) second mixing step", "(e) second granulation step", and "(f) second firing step".

(a) First Mixing Step

This step is a step of forming a first slurry by mixing a manganese compound, a lithium compound, a phosphate compound, a first chelate compound, and a first solvent. Hereinafter, an example in which LMFP is manufactured as a positive electrode active material will be described. However, the positive electrode active material in the disclosure is not limited to LMFP.

For example, a manganese compound, a lithium compound, a phosphate compound, and an iron compound may be weighed to achieve the composition ratio (molar ratio) represented by the composition formula "$Li_{1-a}Mn_{1-x}Fe_xPO_4$ ($-0.5 \leq a \leq 0.5$ and $0 \leq x < 1$)". Examples of the manganese compound may include manganese carbonate. Examples of the lithium compound may include lithium hydroxide. Examples of the phosphate compound may include lithium dihydrogen phosphate. Examples of the iron compound may include ferric phosphate.

In this step, a first carbon source may be added. The first carbon source is a raw material for C of the coating material. Examples of the first carbon source may include a saccharide and an organic acid. Examples of the first carbon source may include glucose, sucrose, fructose, and citric acid. The additive amount of the first carbon source may, for example, range from 0% to 5% by mass fraction relative to the raw material mixture.

The first chelate compound is a raw material for C and a Group 2 element in the coating material. The first chelate compound contains a Group 2 element and a ligand. Examples of the ligand include sugar carboxylic acid. Examples of the sugar carboxylic acid include maltobionic acid, isomaltobionic acid, maltotrionic acid, isomaltotrionic acid, maltohexaonic acid, maltotetraonic acid, cellobionic acid, and lactobionic acid. The first chelate compound may be, for example, magnesium maltobionate. When the first chelate compound is magnesium maltobionate, the additive amount may, for example, range from 1% to 30% by mass fraction relative to the raw material mixture.

Examples of the first solvent may include water. The solid content concentration of the first slurry may, for example, range from 20% to 40% by mass fraction.

The particle size in the first slurry may be adjusted by performing wet grinding. For example, wet grinding may be performed such that the D50 ranges from 0.10 $\mu$m to 1 $\mu$m.

(b) First Granulation Step

This step is a step of forming first precursor particles by drying the first slurry.

First precursor particles may be granulated, for example, by spray drying. An inlet temperature may, for example, range from 230°C to 270°C. An outlet temperature may, for example, range from 100°C to 130°C. An inlet pressure may, for example, range from 1.8 MPa to 2.2 MPa. The nozzle pressure of a spray nozzle may, for example, range from 0.1 MPa to 0.3 MPa.

### (c) First Firing Step

This step is a step of forming second precursor particles by subjecting the first precursor particles to a first heat treatment.

A selected heat treatment furnace (such as an electric furnace and a muffle furnace) can be used. An atmosphere in this step may be, for example, an inert atmosphere. The inert atmosphere may be, for example, a nitrogen atmosphere. A first heat treatment temperature may, for example, range from 200°C to 600°C. A first heat treatment time may, for example, range from four hours to six hours. During a heating process in firing, instead of being continuously heated, it is applicable that heating is once stopped around 200°C and the temperature is maintained at 200°C for about an hour.

### (d) Second Mixing Step

This step is a step of forming a second slurry by mixing the second precursor particles, a second carbon source, and a second solvent.

Examples of the second carbon source may include a saccharide and an organic acid. Examples of the second carbon source may include glucose, sucrose, fructose, and citric acid. The additive amount of the second carbon source may, for example, range from 0.1% to 12% by mass fraction relative to the second precursor particles.

In this step, a second chelate compound may be added. The second chelate compound contains a Group 2 element and a ligand. Examples of the ligand include sugar carboxylic acid. Examples of the sugar carboxylic acid include maltobionic acid, isomaltobionic acid, maltotrionic acid, isomaltotrionic acid, maltohexaonic acid, maltotetraonic acid, cellobionic acid, and lactobionic acid. The second chelate compound may be, for example, magnesium maltobionate. When the second chelate compound is magnesium maltobionate, the additive amount of the second chelate compound may, for example, range from 0% to 65% by mass fraction relative to the second precursor particles. The atomic fraction of the Group 2 element in the coating material region can be adjusted by adjusting the additive amount of the second chelate compound.

Examples of the second solvent may include water. The solid content concentration of the second slurry may, for example, range from 10% to 30% by mass fraction.

### (e) Second Granulation Step

This step is a step of forming third precursor particles by drying the second slurry.

For example, the third precursor particles may be granulated, for example, by spray drying. An inlet temperature may, for example, range from 230°C to 270°C. An outlet temperature may, for example, range from 100°C to 130°C. An inlet pressure may, for example, range from 1.8 MPa to 2.2 MPa. The nozzle pressure of a spray nozzle may, for example, range from 0.1 MPa to 0.3 MPa.

### (f) Second Firing Step

This step is a step of manufacturing an olivine-type phosphate compound by subjecting the third precursor particles to a second heat treatment.

A selected heat treatment furnace (such as an electric furnace and a muffle furnace) can be used. An atmosphere in this step may be, for example, an inert atmosphere. The inert atmosphere may be, for example, a nitrogen atmosphere. A second heat treatment temperature may, for example, range from 200°C to 700°C. A second heat treatment time may, for example, range from four hours to six hours. During a heating process in firing, instead of being continuously heated, it is applicable that heating is once stopped around 200°C and the temperature is maintained at 200°C for about an hour.

### Battery

In some present embodiments, a battery has a monopolar structure. In some present embodiments, a battery has a bipolar structure. In an example, a battery with a bipolar structure (bipolar battery) will be described.

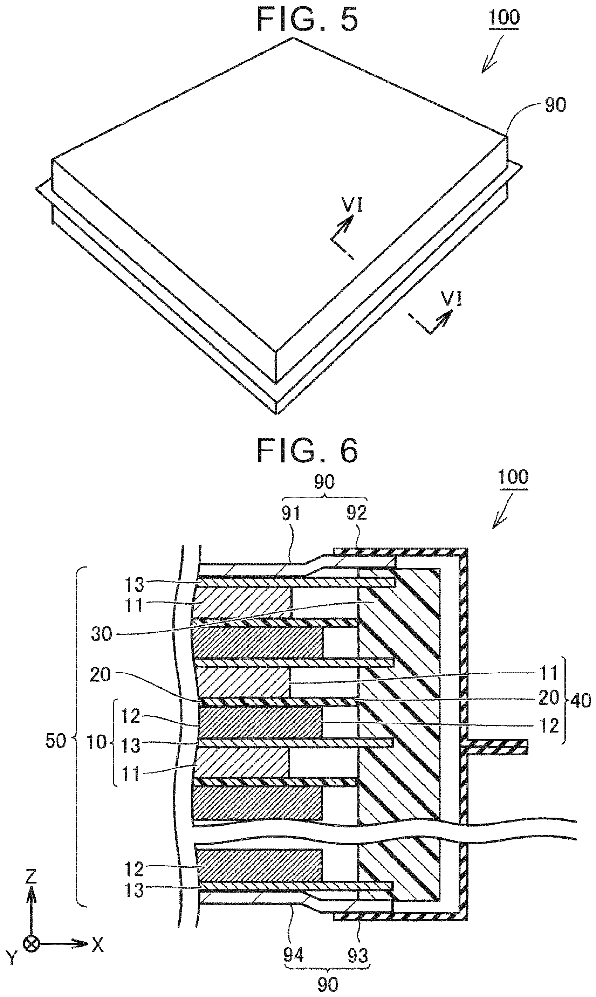

FIG. 5 is a schematic perspective view of a battery in the present embodiment. FIG. 6 is a schematic sectional view taken along the line VI-VI in FIG. 5. Hereinafter, a "normal direction" represents the direction normal to the surface of a sheet-shaped member (such as a foil and an electrode). An "in-plane direction" represents a selected direction orthogonal to the normal direction. In FIG. 6, the Z-axis direction corresponds to the normal direction. The X-axis direction and the Y-axis direction are examples of the in-plane direction.

The battery 100 includes an outer case 90 and a power generation element 50. The outer case 90 houses the power generation element 50. The outer case 90 may include, for example, a first current collector plate 91, a first laminated film 92, a second laminated film 93, and a second current collector plate 94. The first laminated film 92 and the second laminated film 93 are joined to each other at the end in the in-plane direction. At the joint between the first laminated film 92 and the second laminated film 93, a seal member (not shown) may be interposed between the first laminated film 92 and the second laminated film 93.

The first current collector plate 91 and the second current collector plate 94 are joined to the power generation element 50 at the ends in the stacking direction (Z-axis direction). The first laminated film 92 is joined to the first current collector plate 91. The second laminated film 93 is joined to the second current collector plate 94. At the joint between the current collector plate and the laminated film, a seal member (not shown) may be interposed between the current collector plate and the laminated film.

The power generation element 50 includes a plurality of bipolar electrodes 10. The bipolar electrodes 10 are stacked in the normal direction (Z-axis direction). Each of the bipolar electrodes 10 includes a positive electrode layer 11, a current collector foil 13, and a negative electrode layer 12 in this order in the normal direction. In the in-plane direction (for example, the X-axis direction), the current collector foil 13 extends outward compared to the positive electrode layer 11 and the negative electrode layer 12. For example, the current collector foil 13 may extend outward compared to the positive electrode layer 11 and the negative electrode layer 12 over the entire circumference in the in-plane direction.

The current collector foil 13 is a conductor. Examples of the current collector foil 13 may include a metal foil and a conductive resin layer. For example, the current collector foil 13 may be formed by bonding Al foil and Cu foil together. Carbon material may be applied to the surface of the current collector foil 13. Examples of the carbon material may include carbon black.

The power generation element 50 includes a seal member 30. At the end in the in-plane direction, the seal member 30 is joined to the current collector foils 13. The seal member 30 may be, for example, thermally welded to the current collector foils 13. For example, the seal member 30 may be disposed around the entire outer edge in the in-plane direction. Examples of the seal member 30 may contain resin material. The seal member 30 seals the space between any adjacent current collector foils 13 in the normal direction. The seal member 30 seals the space between the current collector foils 13 to define cells 40. The cells 40 are minimum units of the power generation element 50. The battery 100 can also be referred to as a "bipolar module" because the battery 100 includes the plurality of cells 40. Each of the cells 40 is hermetically sealed. The cells 40 are isolated from one another. Each of the cells 40 includes the positive electrode layer 11, a separator 20, the negative electrode layer 12, and an electrolytic solution.

Positive Electrode Layer

The positive electrode layer 11 adheres to one side of the current collector foil 13. For example, grooves may be formed in the positive electrode layer 11. The positive electrode layer 11 may be formed, for example, in a striped pattern. The positive electrode layer 11 contains a positive electrode active material. In other words, the electrode includes a positive electrode active material. The details of the positive electrode active material are as described above.

The positive electrode layer 11 may further contain, for example, a conductive material and a binder in addition to the positive electrode active material. The formulation amount of conductive material may, for example, range from 0.1 parts by mass to 10 parts by mass relative to 100 parts by mass of the positive electrode active material. The conductive material can contain any component. The conductive material may include, for example, at least one selected from the group consisting of graphite, acetylene black (AB), Ketjen black (registered trademark), vapor-grown carbon fiber (VGCF), carbon nanotubes (CNT), and graphene flakes (GF).

The formulation amount of binder may, for example, range from 0.1 parts by mass to 10 parts by mass relative to 100 parts by mass of the positive electrode active material. The binder can contain any component. The binder may include, for example, at least one selected from the group consisting of polyvinylidene fluoride (PVdF), vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinylpyrrolidone (PVP), polyoxyethylene alkyl ether, and derivatives of them.

The positive electrode layer 11 may further contain, for example, an inorganic filler, an organic filler, a solid electrolyte, a surface modifier, a dispersant, a lubricant, a flame retardant, a protective agent, flux, a coupling agent, and an adsorbent. The positive electrode layer 11 may contain, for example, polyoxyethylene allyl phenyl ether phosphate, zeolite, a silane coupling agent, $MoS_2$, or $WO_3$.

Negative Electrode Layer

The negative electrode layer 12 adheres to one side of the current collector foil 13. The negative electrode layer 12 is disposed on the opposite side from the positive electrode layer 11. The negative electrode layer 12 may have a larger area than the positive electrode layer 11. The negative electrode layer 12 contains a negative electrode active material.

The negative electrode active material may be, for example, in the form of particles or in the form of sheet. The D50 of the negative electrode active material may be, for example, greater than or equal to 1 $\mu$m, greater than or equal to 5 $\mu$m, or greater than or equal to 10 $\mu$m. The D50 of the negative electrode active material may be, for example, less than or equal to 30 $\mu$m, less than or equal to 20 $\mu$m, may be less than or equal to 15 $\mu$m, or less than or equal to 10 $\mu$m.

The negative electrode active material may contain any component. The negative electrode active material may include, for example, at least one selected from the group consisting of a carbon-based active material, an alloy-based active material, an Si-C composite material, Li metal, an Li-based alloy, and lithium titanate. In some present embodiments, the battery may be an Li metal negative electrode battery.

The carbon-based active material may include, for example, at least one selected from the group consisting of graphite, soft carbon, and hard carbon. "Graphite" is a generic name of natural graphite and artificial graphite. Graphite may be a mixture of natural graphite and artificial graphite. A mixing ratio (mass ratio) may be, for example, "Natural graphite/Artificial graphite = 1/9 to 9/1", "Natural graphite/Artificial graphite = 2/8 to 8/2", or "Natural graphite/Artificial graphite = 3/7 to 7/3".

The surface of graphite may be coated with, for example, amorphous carbon. The surface of graphite may be coated with, for example, a heterogeneous material. The heterogeneous material may include, for example, at least one selected from the group consisting of P, W, Al, and O. The heterogeneous material may include, for example, at least one selected from the group consisting of $Al(OH)_3$, AlOOH, $Al_2O_3$, $WO_3$, $Li_2CO_3$, $LiHCO_3$, and $Li_3PO_4$.

The alloy-based active material may include, for example, at least one selected from the group consisting of Si, Li silicate, SiO, an Si-based alloy, tin (Sn), SnO, and an Sn-based alloy.

SiO may be, for example, represented by the following general formula.

$$SiO_x$$

In the formula, the condition 0 < x < 2 is satisfied. For example, the condition $0.5 \leq x \leq 1.5$ or $0.8 \leq x \leq 1.2$ may be satisfied.

The "Si-C composite material" refers to a composite material made of carbon-based active material (such as graphite) and alloy-based active material (such as Si). For example, Si fine particles may be dispersed in carbon particles. For example, Si fine particles may be dispersed in graphite particles. For example, Li silicate particles may be coated with carbon material (such as amorphous carbon).

Separator

The separator 20 can separate the positive electrode layer 11 from the negative electrode layer 12. The separator 20 has electrical insulation properties. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous membrane or a nonwoven fabric. The resin film includes a resin backbone. The resin backbone may be, for example, continuous in a mesh form. Pores are formed in gaps of the resin backbone. The resin film can allow an electrolytic solution to pass through. The resin film may have, for example, an average pore size of less than or equal to 1 $\mu$m. The average pore size of the resin film may, for example, range from 0.01 $\mu$m to 1 $\mu$m or from 0.1 $\mu$m to 0.5 $\mu$m. The "average pore size" can be measured by mercury intrusion method. The Gurley value of the resin film may, for example, range from 50 s/100cm$^3$ to 250 s/100cm$^3$. A "Gurley value" can be measured by using Gurley test method.

The resin film may include, for example, at least one selected from the group consisting of an olefin resin, a polyurethane resin, a polyamide resin, a cellulose resin, a polyether resin, an acrylic resin, and a polyester resin. The resin film may include, for example, at least one selected from the group consisting of polyethylene (PE), polypropylene (PP), polyamide (PA), polyamide imide (PAI), polyimide (PI), aromatic polyamide (aramid), polyphenylene ether (PPE), and derivatives of them. The resin film can be formed by, for example, stretching or phase separation. The thickness of the resin film may, for example, range from 5 $\mu$m to 50 $\mu$m or from 10 $\mu$m to 25 $\mu$m.

The resin film may have, for example, a single layer structure. The resin film may consist of, for example, a PE layer. The backbone of the PE layer is formed of PE. The PE layer can have a shutdown function. The resin film may have, for example, a multilayer structure. The resin film may include, for example, a PP layer and a PE layer. The backbone of the PP layer is formed of PP. The resin film may have, for example, a three-layer structure. The resin film may be formed by, for example, stacking a PP layer, a PE layer, and a PP layer in this order. The thickness of the PE layer may, for example, range from 5 $\mu$m to 20 $\mu$m. The thickness of the PP layer may, for example, range from 3 $\mu$m to 10 $\mu$m.

The inorganic particle layer may be formed on the surface of the resin film. The inorganic particle layer may be formed only on one side of the resin film or may be formed on both sides. The inorganic particle layer may be formed on the surface facing the positive electrode layer 11 or on the surface facing the negative electrode layer 12. The inorganic particle layer may be formed on the surface of the positive electrode layer 11 or on the surface of the negative electrode layer 12.

The inorganic particle layer is porous. The inorganic particle layer contains inorganic particles. The inorganic particles can also be referred to as "inorganic filler". Pores are formed in gaps between the inorganic particles. The thickness of the inorganic particle layer may, for example, range from $0.5\ \mu m$ to $10\ \mu m$ or from $1\ \mu m$ to $5\ \mu m$. The inorganic particles may contain, for example, heat-resistant material. The inorganic particle layer containing heat-resistant material is also referred to as "heat resistance layer (HRL)". The inorganic particles may include, for example, at least one selected from the group consisting of boehmite, alumina, zirconia, titania, magnesia, and silica. The inorganic particles can have any shape. The inorganic particles may have, for example, a spherical shape, a rod shape, a plate shape, or a fibrous shape. The D50 of the inorganic particles may, for example, range from $0.1\ \mu m$ to $10\ \mu m$ or from $0.5\ \mu m$ to $3\ \mu m$. The inorganic particle layer may further contain a binder. The binder may include, for example, at least one selected from the group consisting of an acrylic resin, a polyamide resin, a fluororesin, an aromatic polyether resin, and a liquid crystal polyester resin.

The separator 20 may include, for example, an organic particle layer. The separator 20 may include, for example, an organic particle layer instead of a resin film. The separator 20 may include, for example, an organic particle layer instead of an inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The thickness of the organic particle layer may, for example, range from $0.1\ \mu m$ to $50\ \mu m$, from $0.5\ \mu m$ to $20\ \mu m$, from $0.5\ \mu m$ to $10\ \mu m$, or from $1\ \mu m$ to $5\ \mu m$. The organic particle layer contains organic particles. The organic particles can also be referred to as "organic filler". The organic particles may contain heat-resistant material. The organic particles may include, for example, at least one selected from the group consisting of PE, PP, PTFE, PI, PAI, PA, aramid. The organic particles may have, for example, a spherical shape, a rod shape, a plate shape, or a fibrous shape. The D50 of the organic particles may, for example, range from $0.1\ \mu m$ to $10\ \mu m$ or from $0.5\ \mu m$ to $3\ \mu m$.

The separator 20 may include, for example, a mixed layer. The mixed layer contains both inorganic particles and organic particles.

Electrolytic Solution

The electrolytic solution is a liquid electrolyte. The electrolytic solution includes a solute and a solvent. The concentration of the solute may, for example, range from 0.5 mol/L to 1 mol/L, from 1 mol/L to 1.5 mol/L, from 1.5 mol/L to 2 mol/L, from 2 mol/L to 2.5 mol/L, or from 2.5 mol/L to 3 mol/L. "mol/L" can be represented as "M". The solute contains a supporting electrolyte (Li salt). The solute may contain, for example, an inorganic acid salt, an imide salt, an oxalato complex, or a halide. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of them.

The electrolytic solution may include, for example, a carbonate solvent (carbonate ester solvent). The solvent may include, for example, a cyclic carbonate, a chain carbonate, or a fluorinated carbonate. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of them.

The solvent may include a cyclic carbonate (such as EC, PC, and FEC) and a chain carbonate (such as EMC, DMC, and DEC). The mixing ratio (volume ratio) of cyclic carbonate and chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may include a cyclic carbonate (such as EC and PC) and a fluorinated cyclic carbonate (such as FEC). The mixing ratio (volume ratio) of cyclic carbonate and fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3", or "cyclic carbonate/fluorinated cyclic carbonate = 3/7 to 1/9".

The solvent may include, for example, EC, FEC, EMC, DMC, and DEC. The volume ratio of the components may satisfy, for example, the condition represented by the following equation.

$$V_{EC} + V_{FEC} + V_{EMC} + V_{DMC} + V_{DEC} = 10$$

In the above equation, $V_{EC}$, $V_{FEC}$, $V_{EMC}$, $V_{DMC}$, and $V_{DEC}$ represent the volume ratios of EC, FEC, EMC, DMC, and DEC, respectively. The conditions $1 \leq V_{EC} \leq 4$, $0 \leq V_{FEC} \leq 3$, $V_{EC} + V_{FEC} \leq 4$, $V_{EMC} \leq 9$, $0 \leq V_{DMC} \leq 9$, $0 \leq V_{DEC} \leq 9$, and $6 \leq V_{EMC} + V_{DMC} + V_{DEC} \leq 9$ are satisfied.

For example, the condition $1 \leq V_{EC} \leq 2$ or $2 \leq V_{EC} \leq 3$ may be satisfied. For example, the condition $1 \leq V_{FEC} \leq 2$ or $2 \leq V_{FEC} \leq 4$

may be satisfied. For example, the condition $3 \leq V_{EMC} \leq 4$ or $6 \leq V_{EMC} \leq 8$ may be satisfied. For example, the condition $3 \leq V_{DMC} \leq 4$ or $6 \leq V_{DMC} \leq 8$ may be satisfied. For example, the condition $3 \leq V_{DEC} \leq 4$ or $6 \leq V_{DEC} \leq 8$ may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in volume ratio.

The electrolytic solution may include an ether solvent. The electrolytic solution may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethyl glyme, triglyme, tetraglyme, and derivatives of them.

The electrolytic solution may contain any additive. The additive amount (mass fraction relative to the entire electrolytic solution) may, for example, range from 0.01% to 5%, from 0.05% to 3%, or from 0.1% to 1%. Examples of the additive may include a solid electrolyte interphase (SEI) formation promoter, an SEI formation inhibitor, a gas generator, an overcharge preventer, a flame retardant, an oxidation inhibitor, an electrode protectant, and a surfactant.

The additive may include, for example, at least one selected from the group consisting of vinylene carbonate (VC), vinyl ethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), $\gamma$-butyrolactone, phosphazene compounds, carboxylic acid esters (such as methyl formate (MF), methyl acetate (MA), methyl propionate (MP), and diethyl malonate (DEM)), fluorobenzenes (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, and hexafluorobenzene), fluorotoluenes (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, and octafluorotoluene), benzotrifluorides (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, and 4-methylbenzotrifluoride), fluoroxylenes (such as 3-fluoro-o-xylene, 4-fluoro-o-xylene, 2-fluoro-m-xylene, and 5-fluoro-m-xylene), sulfur-containing heterocyclic compounds (such as benzothiazole, 2-methylbenzothiazole, and tetrathiafulvalene), nitrile compounds (such as adiponitrile and succinonitrile), phosphate esters (such as trimethyl phosphate and triethyl phosphate), carboxylic acid anhydrides (such as acetic anhydride, propionic anhydride, oxalic anhydride, succinic anhydride, maleic anhydride, phthalic anhydride, and benzoic anhydride), alcohols (such as methanol, ethanol, n-propyl alcohol, ethylene glycol, and diethylene glycol monomethyl ether), and derivatives of them.

The components described above as the solute and the solvent may be used as trace components (additives). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of them.

The electrolytic solution may include an ionic liquid. The ionic liquid may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of them.

In some present embodiments, the battery may include a gel electrolyte. In other words, the battery may be a polymer battery. The gel electrolyte may include an electrolytic solution and a polymer material. A polymer matrix is made up of the polymer material. The polymer material may include, for example, at least one selected from the group consisting of PVdF, PVdF-HFP, polyacrylonitrile (PAN), PVdF-PAN, polyethylene oxide (PEO), polyethylene glycol (PEG), and derivatives of them.

Manufacturing Method for Positive Electrode Active Material

No. 1

(a) First Mixing Step

To achieve the composition ratio represented by the composition formula "$Li_{1.04}Mn_{0.6}Fe_{0.4}PO_4$", lithium hydroxide monohydrate, manganese carbonate, ferric phosphate, and lithium dihydrogen phosphate were weighed. Glucose was weighed such that the mass fraction of C (coating material) was 2% relative to the mass of the obtained LMFP. The first slurry was formed by mixing the weighed materials with water. The solid content concentration of the first slurry was 30% by mass fraction. Wet grinding was performed to obtain a D50 of 0.30 $\mu$m.

(b) First Granulation Step

The first slurry was spray-dried to form the first precursor particles. The inlet temperature was 250°C, the outlet temperature of a spray dryer was 115±15°C, the inlet pressure was 2.0 MPa, and the nozzle pressure of the spray nozzle was 0.2±0.1 MPa.

(c) First Firing Step

The first precursor particles were fired in a nitrogen gas atmosphere to synthesize the positive electrode active material (LMFP). The conditions of this step are as follows. First, the furnace temperature is increased to 200°C at a heating rate of 3°C per minute. The furnace temperature is maintained at 200°C for an hour. Then, the furnace temperature is increased to 580°C at a heating rate of 5°C per minute. The furnace temperature is maintained at 580°C for five hours. Then, the furnace temperature is cooled to 400°C at a cooling rate of 2°C per minute. The furnace temperature is cooled to room temperature at a cooling rate of 15°C per minute.

No. 2

In the first mixing step, maltobionic acid was weighed such that the mass fraction of C (coating material) was 2% relative to the mass of the obtained LMFP. Except for the change in the conditions of the first mixing step, the positive electrode active material was manufactured in the same manner as No. 1.

No. 3 to No. 14

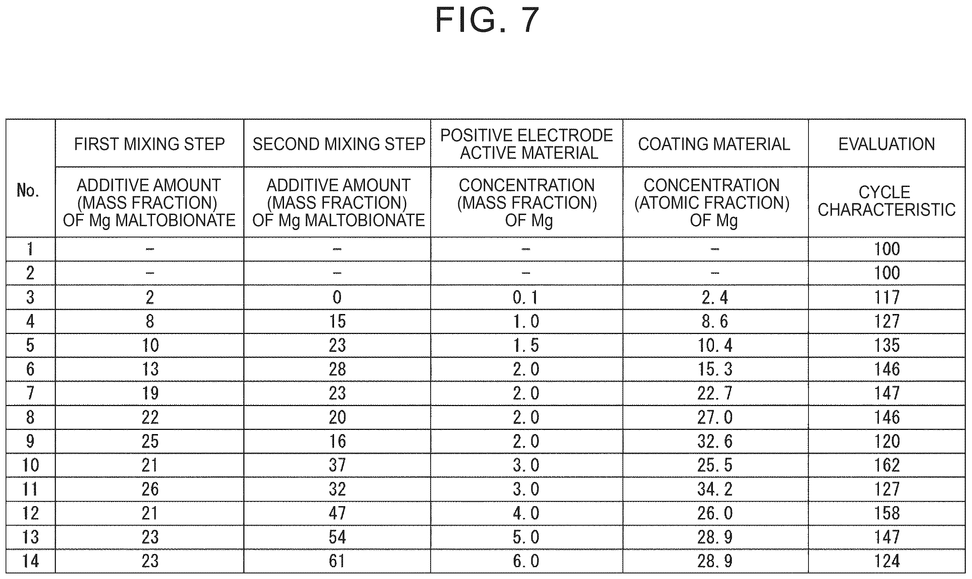

Regarding step (a), magnesium maltobionate was weighed to achieve the value shown in FIG. 7 relative to the total mass of the raw materials. Glucose at a mass fraction of 0.5% was weighed relative to the total mass of the raw materials. Except for the change in the conditions of the first mixing step, steps (a) to (c) were performed under the same conditions as No. 1. It is assumed that LMFP in No. 1 is the "second precursor particles" described below.

(d) Second Mixing Step

Magnesium maltobionate was weighed such that the mass fraction of Mg was the value shown in FIG. 7 relative to the mass of the obtained LMFP. In consideration of the amount of magnesium maltobionate, glucose was weighed such that the mass fraction of C (coating material) was 2% relative to the mass of the obtained LMFP. The second slurry was formed by mixing the second precursor particles, magnesium maltobionate, glucose, and water. The solid content concentration of the second slurry was 20% by mass fraction.

(e) Second Granulation Step

The second slurry was spray-dried to form the third precursor particles. A target value of D50 of the third precursor particles was $9\pm1$ $\mu$m. The inlet temperature was 250°C, the outlet temperature of a spray dryer was $115\pm15$°C, the inlet pressure was 2.0 MPa, and the nozzle pressure of the spray nozzle was $0.2\pm0.1$ MPa.

(f) Second Firing Step

The third precursor particles were fired in a nitrogen gas atmosphere to synthesize the positive electrode active material (LMFP). The conditions of this step are as follows. First, the furnace temperature is increased to 200°C at a heating rate of 3°C per minute. The furnace temperature is maintained at 200°C for an hour. Then, the furnace temperature is increased to 650°C at a heating rate of 5°C per minute. The furnace temperature is maintained at 650°C for five hours. Then, the furnace temperature is cooled to 400°C at a cooling rate of 2°C per minute. The furnace temperature is cooled to room temperature at a cooling rate of 15°C per minute.

Manufacturing of Coin Cell

A mixture was formed by mixing the positive electrode active material, conductive material (acetylene black), and binder (PVdF). The mixing ratio (mass ratio) was "positive electrode active material/conductive material/binder = 92/5/3". A paste was formed by dispersing the mixture in a solvent (N-methyl-2-pyrrolidone). The solid content concentration of the paste was 50% by mass fraction. The positive electrode layer was formed by applying the paste to the surface of an Al foil and drying the paste. A positive electrode roll was formed by adjusting the density of the positive electrode layer to 1.8 g/cm$^3$ through roll press. The positive electrode roll was subjected to a vacuum drying treatment at 120°C for 12 hours. After drying, a disc-shaped sample (diameter: 14 mm) was obtained from the positive electrode roll by punching.

A coin cell was assembled inside a glove box. The cell configuration is as follows.

Working electrode: disc-shaped sample (positive electrode)
Counter electrode: Li foil

Separator: polymeric porous membrane

Electrolytic solution: "EC/DMC = 3/7 (volume ratio)", $LiPF_6$ (1 mol/L)

Evaluation

Measurement

A TEM-EDS analysis was conducted using the above-described method. As a result, in No. 3 to No. 14, Mg that is a Group 2 element was detected within the primary particles and within the coating material. The concentration (atomic fraction) of Mg in the coating material region and the concentration (mass fraction) of Mg relative to the mass of the positive electrode active material were measured using the above-described method. The results are shown in FIG. 7.

Cycle Characteristic

Initial charge and discharge at a constant current was performed at 25°C. An upper limit charging voltage was 4.3 V. A lower limit discharging voltage was 3.0 V. A pre-cycling discharge capacity was measured at a rate of 0.1 C at 25°C. "C" represents the rate (hour rate) of current. The rated capacity of the battery is discharged in an hour at a rate of 1 C. Subsequently, 100 charge-discharge cycles were performed at a rate of 0.1 C at 60°C. After 100 cycles, a post-cycling discharge capacity was measured again at a rate of 0.1 C at 25°C. A capacity retention rate was calculated by dividing the post-cycling discharge capacity by the pre-cycling discharge capacity. As the capacity retention rate increases, the cycle characteristic is considered to be better. The results are shown in FIG. 7. The values of the cycle characteristics in FIG. 7 are relative values where the cycle characteristic of No. 1 is set to 100.

Results

When the conditions of the disclosure are satisfied, the cycle characteristic tends to improve. When the atomic fraction of Mg in the coating material region ranges from 10% to 30%, the cycle characteristic tends to further improve. When the mass fraction of Mg relative to the mass of the positive electrode active material ranges from 1.5% to 5%, the cycle characteristic tends to further improve.

**Claims**

1. A positive electrode active material comprising:

   a primary particle (1) containing an olivine-type phosphate compound; and
   a coating material (5) containing carbon and coating at least part of a surface of the primary particle (1), wherein in a TEM-EDS analysis, a Group 2 element is detected within the primary particle (1) and within the coating material (5).

2. The positive electrode active material according to claim 1, wherein the Group 2 element is detected in a region within the coating material (5) at a distance of 2 nm or less from an interface between the primary particle (1) and the coating material (5).

3. The positive electrode active material according to claim 2, wherein an atomic fraction of the Group 2 element in the region within the coating material (5) is higher than or equal to 2%.

4. The positive electrode active material according to claim 3, wherein the atomic fraction of the Group 2 element in the region within the coating material (5) is higher than or equal to 15.3% and lower than or equal to 28.9%.

5. The positive electrode active material according to claim 1, wherein a mass fraction of the Group 2 element is higher than or equal to 0.1% relative to a mass of the positive electrode active material.

6. The positive electrode active material according to claim 1, wherein a mass fraction of the Group 2 element is higher than or equal to 2% and lower than or equal to 5% relative to a mass of the positive electrode active material.

7. The positive electrode active material according to claim 1, wherein the Group 2 element is magnesium.

8. The positive electrode active material according to claim 1, wherein a secondary particle (2) is made up of the primary particles (1).

9. The positive electrode active material according to claim 1, wherein the olivine-type phosphate compound contains at least one selected from the group consisting of lithium manganese phosphate and lithium manganese iron phosphate.

10. The positive electrode active material according to claim 9, wherein the olivine-type phosphate compound contains the lithium manganese phosphate.

11. The positive electrode active material according to claim 9, wherein the olivine-type phosphate compound contains the lithium manganese iron phosphate.

12. A battery (100) comprising the positive electrode active material according to any one of claims 1 to 11.

13. The battery (100) according to claim 12, wherein the battery (100) has a bipolar structure.

14. A manufacturing method for a positive electrode active material, the manufacturing method comprising:

(a) forming a first slurry by mixing a manganese compound, a lithium compound, a phosphate compound, a chelate compound, and a first solvent;
(b) forming first precursor particles by drying the first slurry;
(c) forming second precursor particles by subjecting the first precursor particles to a first heat treatment;
(d) forming a second slurry by mixing the second precursor particles, a carbon source, and a second solvent;
(e) forming third precursor particles by drying the second slurry; and
(f) manufacturing an olivine-type phosphate compound by subjecting the third precursor particles to a second heat treatment, wherein:

the olivine-type phosphate compound is surrounded by a coating material (5); and
the chelate compound contains a Group 2 element.

15. The manufacturing method according to claim 14, wherein the chelate compound contains a sugar carboxylic acid.

# FIG. 1

D

5

C+Mg

1

LMFP+Mg

# FIG. 2

D

5b — C

5

5a — C+Mg

1

LMFP+Mg

# FIG. 3

# FIG. 4

# FIG. 5

# FIG. 6

# FIG. 7

| No. | FIRST MIXING STEP | SECOND MIXING STEP | POSITIVE ELECTRODE ACTIVE MATERIAL | COATING MATERIAL | EVALUATION |
|---|---|---|---|---|---|
| | ADDITIVE AMOUNT (MASS FRACTION) OF Mg MALTOBIONATE | ADDITIVE AMOUNT (MASS FRACTION) OF Mg MALTOBIONATE | CONCENTRATION (MASS FRACTION) OF Mg | CONCENTRATION (ATOMIC FRACTION) OF Mg | CYCLE CHARACTERISTIC |
| 1 | – | – | – | – | 100 |
| 2 | – | – | – | – | 100 |
| 3 | 2 | 0 | 0.1 | 2.4 | 117 |
| 4 | 8 | 15 | 1.0 | 8.6 | 127 |
| 5 | 10 | 23 | 1.5 | 10.4 | 135 |
| 6 | 13 | 28 | 2.0 | 15.3 | 146 |
| 7 | 19 | 23 | 2.0 | 22.7 | 147 |
| 8 | 22 | 20 | 2.0 | 27.0 | 146 |
| 9 | 25 | 16 | 2.0 | 32.6 | 120 |
| 10 | 21 | 37 | 3.0 | 25.5 | 162 |
| 11 | 26 | 32 | 3.0 | 34.2 | 127 |
| 12 | 21 | 47 | 4.0 | 26.0 | 158 |
| 13 | 23 | 54 | 5.0 | 28.9 | 147 |
| 14 | 23 | 61 | 6.0 | 28.9 | 124 |

## EUROPEAN SEARCH REPORT

**Application Number**

EP 25 22 4923

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/244309 A1 (SHENZHEN DYNANONIC CO LTD [CN]; QUJING DYNANONIC CO LTD [CN] ET AL.) 5 December 2024 (2024-12-05)<br>* see EP 4 722 151 A1 *<br>& EP 4 722 151 A1 (SHENZHEN DYNANONIC CO LTD [CN]) 8 April 2026 (2026-04-08)<br>* paragraphs [0081] - [0090]; claims 1-20; figures 2-4 * | 1-15 | INV.<br>H01M4/04<br>H01M4/136<br>H01M4/36<br>H01M4/58<br>H01M4/62<br>H01M10/0525 |
| A | CN 114 975 990 A (INST OF ENERGY HEBEI ACADEMY OF SCIENCE) 30 August 2022 (2022-08-30)<br>* paragraphs [0009], [0054] - [0064]; claims 1-10; figures 1-2 * | 1-15 | |
| A | EP 2 687 482 A1 (ADVANCED LITHIUM ELECTROCHEMISTRY CO LTD [TW]) 22 January 2014 (2014-01-22)<br>* claims 1-19; figure 1 * | 1-15 | |

-----

-----

-----

**TECHNICAL FIELDS SEARCHED (IPC)**

H01M

The present search report has been drawn up for all claims

| Place of search | Date of completion of the search | Examiner |
|---|---|---|
| Munich | 11 May 2026 | Szekely, Noemi Kinga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4923

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2026

| Patent document cited in search report | | Publication date | Patent family member(s) | | Publication date |
|---|---|---|---|---|---|
| WO 2024244309 | A1 | 05-12-2024 | CN | 116692812 A | 05-09-2023 |
| | | | EP | 4722151 A1 | 08-04-2026 |
| | | | US | 20260028240 A1 | 29-01-2026 |
| | | | WO | 2024244309 A1 | 05-12-2024 |
| CN 114975990 | A | 30-08-2022 | NONE | | |
| EP 2687482 | A1 | 22-01-2014 | CA | 2830111 A1 | 20-09-2012 |
| | | | CN | 103347813 A | 09-10-2013 |
| | | | EP | 2687482 A1 | 22-01-2014 |
| | | | JP | 2014512639 A | 22-05-2014 |
| | | | KR | 20140010143 A | 23-01-2014 |
| | | | RU | 2013141273 A | 27-04-2015 |
| | | | TW | 201242149 A | 16-10-2012 |
| | | | TW | 201605104 A | 01-02-2016 |
| | | | US | 2014004421 A1 | 02-01-2014 |
| | | | WO | 2012122951 A1 | 20-09-2012 |

EPO FORM P0459

For more details about this annex : see Official Journal of the European Patent Office, No. 12/82

**EP 4 769 495 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019536194 W

- JP 2019536194 A